# EUROPÄISCHE PATENTSCHRIFT

(11) **EP 4 582 836 B1**
(45) Veröffentlichungstag und Bekanntmachung des Hinweises auf die Patenterteilung: **20.05.2026**
(21) Anmeldenummer: 24219645.9
(22) Anmeldetag: 13.12.2024
(51) Int. Cl.: G01S 7/481, G01S 17/42, G01S 17/48, G01S 7/497

(54) **ROTIERENDER OPTISCHER TRIANGOLATIONS SCANNER**
ROTATING OPTICAL TRIANGULATION SCANNER
SCANNER OPTIQUE ROTATIF À TRIANGULATION

(30) Priorität: 08.01.2024 DE 102024100330
(43) Veröffentlichungstag der Anmeldung: 09.07.2025
(73) Patentinhaber: SICK AG, 79183 Waldkirch (DE)
(72) Erfinder: BALDISCHWEILER, Boris, 79194 Gundelfingen (DE); STEINBORN, Olaf, 77654 Offenburg (DE)
(74) Vertreter: Manitz Finsterwald Patent- und Rechtsanwaltspartnerschaft mbB

(56) Entgegenhaltungen:
- DE-A1- 102019 129 986
- US-A1- 2015 098 075
- US-A1- 2017 176 575

## Beschreibung

Die Erfindung betrifft einen optischen Scanner, der zur Ermittlung des Abstands eines Objekts bezogen auf den optischen Scanner vorgesehen ist.

Die Entfernung oder Distanz eines Objekts bezogen auf eine Referenzposition kann beispielsweise mit optischen Sensoren ermittelt werden, die nach dem Triangulationsprinzip arbeiten oder die eine Lichtlaufzeitmessung (ToF für engl. Timeof-Flight) durchführen. Die Sensoren mit Laufzeitmessung sind jedoch mit höherem Aufwand und daher mit höheren Kosten verbunden als Sensoren, die das Triangulationsprinzip ausnutzen, da üblicherweise Lichtlaufzeiten im Pico- bis Nanosekundenbereich mit technisch anspruchsvollen Einrichtungen erfasst werden müssen.

Optische Scanner, die nach dem Triangulationsprinzip arbeiten, tasten üblicherweise einen Raumbereich ab, wobei ein Lichtstrahl des Scanners entlang einer Linie läuft (1D-Scanner) oder einen Flächenbereich abtastet (2D-Scanner). Eine ausreichende Tiefeninformation liefern solche Scanner jedoch nur für einen sehr eingeschränkten Winkelbereich.

Diese Einschränkung erschwert die Verwendung solcher Scanner beispielsweise bei autonom fahrenden Fahrzeugen oder Robotergreifern, bei denen die Ermittlung der Entfernung oder der Distanz von Objekten innerhalb eines Überwachungsbereichs erforderlich ist, der sich über einen großen Winkelbereich erstrecken sollte. Ein solcher großer Winkelbereich des Überwachungsbereichs kann beispielsweise nahezu 360° umfassen.

In der US 2015/0098075 A1 ist ein optischer Scanner beschrieben, der zur Ermittlung des Abstands eines Objekts bezogen auf den optischen Scanner vorgesehen ist und eine Lichtquelle, eine Empfangseinrichtung und eine Ablenkeinrichtung umfasst. Die Lichtquelle ist zum Emittieren eines optischen Sendesignals vorgesehen, während die Empfangseinrichtung Licht empfängt, das durch das an einem Objekt reflektierte oder remittierte Sendesignal entsteht. Die Ablenkeinrichtung lenkt das an dem Objekt reflektierte oder remittierte Licht zur Abbildung auf die Empfangseinrichtung ab. Der Abstand des Objekts bezogen auf den optischen Scanner wird mittels eines Triangulationsverfahrens ermittelt. Ferner führt eine weitere Lichtquelle zusammen mit der Ablenkeinrichtung eine Drehbewegung um eine gemeinsame Achse aus. Das Licht der weiteren Lichtquelle wird nach Reflexion oder Remission an dem Objekt mittels einer Kamera empfangen.

Die DE 10 2019 129 986 A1 beschreibt einen optischen Scanner mit Merkmalen gemäß einer verwandten Technologie, bei dem jedoch keine Lichtquelle eine Drehbewegung mit einer Ablenkeinrichtung ausführt und der Abstand eines Objekts bezogen auf den optischen Scanner mittels eines Laufzeitverfahrens ermittelt wird.

Eine Aufgabe der Erfindung besteht darin, einen optischen Scanner und ein Verfahren zur Ermittlung des Abstands eines Objekts bezogen auf den optischen Scanner zu schaffen, die eine Abtastung eines Überwachungsbereichs über einen großen Winkelbereich gestatten, möglichst von nahezu 360°.

Diese Aufgabe wird durch einen optischen Scanner und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Der optische Scanner ist zur Ermittlung des Abstands eines Objekts bezogen auf den optischen Scanner vorgesehen und umfasst mindestens eine Lichtquelle, eine Empfangseinrichtung und eine Ablenkeinrichtung. Die Lichtquelle ist zum Emittieren eines optischen Sendesignals vorgesehen. Die Empfangseinrichtung ist ortsfest und dazu ausgebildet, Licht zu empfangen, das durch das an einem Objekt reflektierte oder remittierte Sendesignal entsteht. Die Ablenkeinrichtung lenkt zumindest einen Teil des an dem Objekt reflektierten oder remittierten Lichts zur Abbildung auf ein Empfangselement der Empfangseinrichtung ab. Ferner ist die Lichtquelle ausgebildet, zusammen mit der Ablenkeinrichtung eine Drehbewegung um eine gemeinsame Achse auszuführen.

Der Abstand des Objekts wird bezogen auf eine vordefinierte Referenzposition an dem optischen Scanner ermittelt, indem eine Auswerteeinrichtung, die der Empfangseinrichtung zugeordnet ist, beispielweise das Triangulationsprinzip verwendet und anhand einer Position der Abbildung des reflektierten oder remittierten Sendesignals auf dem Empfangselement bei bekannten Abmessungen innerhalb des Scanners den Abstand des Objekts berechnet.

Bei dem Sendesignal kann es sich um einen Lichtstrahl handeln, der beispielsweise von einer Leuchtdiode (LED) oder vorzugsweise von einem Laser emittiert wird und das Objekt somit nahezu punktförmig beleuchtet. Der optische Scanner kann daher einen vordefinierten Überwachungsbereich ein- oder zweidimensional mittels eines solchen Lichtstrahls abtasten. Zur zweidimensionalen Abtastung kann der optische Scanner mehrere Lichtquellen aufweisen, die zum Abtasten einer jeweiligen Lage bzw. Ebene vorgesehen sind und daher beispielsweise übereinander angeordnet sind. Um die an einem oder mehreren Objekten reflektierten oder remittierten Sendesignale der mehreren Lichtquellen mittels der Empfangseinrichtung unterscheiden zu können, ist es dabei sinnvoll, wenn die Lichtquellen jeweils Licht mit unterschiedlicher Wellenlänge bzw. Farbe emittieren oder dass ein zeitliches Multiplexing bei der Steuerung der mehreren Lichtquellen und er Empfangseinrichtung verwendet wird.

Der optische Scanner zeichnet sich dadurch aus, dass die Lichtquelle mit der Ablenkeinrichtung derart gekoppelt ist, dass diese eine synchrone Drehbewegung um die gemeinsame Achse ausführen. Die Lichtquelle und die Ablenkeinrichtung können zu diesem Zweck beispielsweise mechanisch miteinander verbunden sein. Wie vorstehend erwähnt, ist die Empfangseinrichtung im Gegensatz dazu ortsfest angeordnet. Die Lichtquelle, die Ablenkeinrichtung und die ortsfeste Empfangseinrichtung sind derart angeordnet, dass an dem Objekt reflektiertes oder remittiertes Licht auch während der Drehbewegung der Lichtquelle und der Ablenkeinrichtung auf ein oder mehrere Empfangselemente der Empfangseinrichtung abgebildet wird. Das Empfangselement kann zweidimensional ausgebildet sein, beispielsweise als lichtempfindliche Fläche.

Da sich die Lichtquelle mit der Ablenkeinrichtung dreht, bestehen keine Einschränkungen bezüglich des Winkelbereichs, den die Lichtquelle bzw. der optische Scanner abtastet. Folglich ist der optische Scanner geeignet, einen großen Winkelbereich von nahezu oder gleich 360° abzutasten. Der optische Scanner mit gemeinsamer Drehung der Lichtquelle und der Ablenkeinrichtung ermöglicht bei Ausnutzung des Triangulationsprinzips die Bestimmung des Abstands eines Objekts mit geringem Aufwand und daher auf kostengünstige Weise.

Ferner gestattet die gemeinsame Drehung der Lichtquelle und der Ablenkeinrichtung eine kompakte Anordnung bzw. einen kompakten Aufbau der Komponenten des Scanners. Außerdem kann die Empfangseinrichtung dann, wenn deren Empfangselement für den sichtbaren Spektralbereich ausgebildet ist, zusätzlich zur Abstandsermittlung eine Kameraaufnahme des Sichtbereichs bzw. Detektionsbereichs des optischen Scanners erfassen.

Ferner umfasst der optische Scanner zusätzlich eine Auswerteeinrichtung, die zur Bestimmung des Abstands des Objekts bezogen auf den optischen Scanner anhand eines Abstands zwischen einer Abbildungsposition des Objekts auf dem Empfangselement der Empfangseinrichtung und einem Bezugspunkt auf dem Empfangselement ausgebildet ist. Mit anderen Worten kann der Abstand des Objekts bezogen auf den optischen Scanner unter Ausnutzung des Triangulationsprinzips mittels der Auswerteeinheit des Scanners ermittelt werden. Dies ermöglicht eine effiziente Ermittlung des Objektabstands, beispielsweise im Vergleich zu Sensoren, welche den Objektabstand anhand der Lichtlaufzeit bestimmen. Optische Scanner oder Sensoren, die den Abstand oder die Entfernung eines Objekts anhand der Lichtlaufzeit ermitteln, erfordern technisch anspruchsvolle und teure Empfangs- und Auswertungseinheiten, um Lichtlaufzeiten im Pico- bis Nanosekundenbereich messen zu können.

Im Gegensatz zu bekannten Triangulationssensoren unterliegt der abtastbare Winkelbereich des erfindungsgemäßen optischen Scanners nahezu keiner Einschränkung. Es braucht lediglich ein Bezugspunkt auf dem Empfangselement als Ursprung eines Polarkoordinatensystems beispielsweise bestimmt zu werden, um anhand des Abstands zwischen der Abbildungsposition des Objekts und dem Ursprung des Koordinatensystems den Abstand des Objekts bezogen auf den Sensor zu ermitteln. Der Ursprung des Koordinatensystems kann beispielsweise mittels einer Kalibrierungsmessung unter Verwendung eines weit entfernten Objekts ermittelt werden, dessen Abbildungsposition nahezu im Zentrum des Koordinatensystems liegen sollte.

In der Regel können optische Scanner mittels des Triangulationsprinzips lediglich Abstände oder Entfernungen von Objekten bis zu einigen wenigen Metern ermitteln. Daher ist beispielsweise ein Objekt, das sich außerhalb eines solchen typischen Mess- oder Überwachungsbereichs des optischen Scanners befindet, zur Ermittlung des Bezugspunkts auf dem Empfangselement der Empfangseinrichtung geeignet. Die Abstände auf dem Empfangselement zwischen der Abbildungsposition und dem Bezugspunkt verhalten sich umgekehrt proportional zu den zu ermittelnden Abständen der Objekte bezogen auf den optischen Scanner, d.h. zu den tatsächlichen Abständen der Objekte in einem Überwachungsbereich des optischen Scanners.

Zwischen der Ablenkeinrichtung und dem Empfangselement kann ferner eine Empfangsoptik vorgesehen sein. Die Empfangsoptik kann beispielsweise lediglich eine Blende oder aber zusätzliche abbildende Elemente, wie etwa Linsen, umfassen.

Erfindungsgemäß ist eine Winkelposition des Objekts bezogen auf eine vorbestimmte Richtung anhand einer Abbildungsposition auf dem Empfangselement bestimmbar. Aufgrund der synchronen Drehung der Lichtquelle und der Ablenkeinrichtung ist keine Referenz zur Ermittlung der Winkelposition des Objekts erforderlich. Stattdessen kann beispielsweise lediglich die Einbaulage der sich drehenden Lichtquelle bezogen auf die Ablenkeinrichtung vorgegeben sein, so dass die Winkelposition eines Objekts während eines Scandurchlaufs der Winkelposition der Abbildungsposition auf dem Empfangselement auf eindeutige Weise entspricht und sozusagen durch diese kodiert ist.

In der Regel ist die Abbildungsposition zur Bestimmung der Winkelposition gleich der Abbildungsposition zur Bestimmung des Abstandes. Mit anderen Worten kann anhand einer einzigen Abbildungsposition des Objekts sowohl der Abstand als auch die Winkelposition des Objekts bezogen auf den optischen Scanner bestimmt werden. Der optische Scanner kann bei dieser Ausführungsform somit gleichzeitig den Abstand und die Winkelposition des Objekts mit einem relativ geringen Aufwand bereitstellen.

Gemäß einer weiteren Ausführungsform ist die Lichtquelle an der Ablenkeinrichtung angebracht. Die Lichtquelle kann beispielsweise an einer Oberseite oder Unterseite der Ablenkeinrichtung oder hinter der Ablenkeinrichtung an dieser angebracht und mit dieser mechanisch verbunden sein. Wenn die Lichtquelle hinter der Ablenkeinrichtung angeordnet ist, kann die Ablenkeinrichtung zum Beispiel kleine Öffnungen oder halbdurchlässige Segmente oder Bereiche umfassen.

Die Lichtquelle kann bezogen auf die Drehachse in einer Richtung senkrecht zu der Drehachse versetzt sein. Eine mechanische Verbindung der Lichtquelle mit der Ablenkeinrichtung für deren gemeinsame Drehung kann durch einen solchen Versatz erleichtert werden. Dies kann insbesondere dann der Fall sein, wenn die Ablenkeinrichtung bezogen auf die Drehachse unter einem vorbestimmten Winkel angeordnet ist, beispielsweise als schräg angeordneter Spiegel. In einem solchen Fall kann die Lichtquelle an der Oberseite bzw. an einem oberen Rand der Ablenkeinrichtung angeordnet sein, während die Drehachse in der Nähe eines Zentrums der Ablenkeinrichtung verläuft.

Ferner kann die Lichtquelle bezüglich einer horizontalen Ebene, die senkrecht zu der Drehachse verläuft, um einen vordefinierten Winkel geneigt sein. Insbesondere kann die Neigung der Lichtquelle einstellbar sein. Eine solche Neigung der Lichtquelle kann die Festlegung eines bestimmten Überwachungsbereichs des optischen Scanners ermöglichen, der sich beispielsweise auf dem Boden oder in einem Straßenbereich in der Nähe des optischen Scanners befinden kann. Dies kann insbesondere dann relevant sein, wenn der optische Scanner für ein autonom fahrendes Fahrzeug vorgesehen ist.

Das Sendesignal der Lichtquelle trifft bei dieser Ausführungsform somit unter einem einstellbaren Winkel auf einen Bodenbereich in der Umgebung des optischen Scanners bzw. einer Vorrichtung, an welcher der optische Scanner installiert ist. Die Veränderung der Neigung der Lichtquelle ermöglicht darüber hinaus eine Erweiterung des Scanbereichs bzw. Überwachungsbereichs des optischen Scanners. Mit anderen Worten kann der eindimensionale Scanvorgang, der mittels der gemeinsamen Drehbewegung der Lichtquelle und der Ablenkeinrichtung ausgeführt wird, auf eine zweite Dimension senkrecht zu der ursprünglichen eindimensionalen Dreh- bzw. Scanrichtung erweitert werden.

Wenn das Licht des Sendesignals eine Wellenlänge im sichtbaren Spektralbereich aufweist, kann die Lichtquelle bei dieser Ausführungsform zusätzlich dafür eingesetzt werden, einen Schutz- bzw. Überwachungsbereich auf dem Boden in der Umgebung des optischen Scanners zu kennzeichnen. Der optische Scanner kann zu diesem Zweck alternativ auch eine weitere Lichtquelle aufweisen, die ausschließlich zur Beleuchtung des Bodens vorgesehen ist. Eine solche optische Kennzeichnung eines Schutzbereichs ist beispielsweise dann relevant, wenn der optische Scanner an einem autonomen Fahrzeug oder an einem Robotergreifer eingesetzt wird.

Gemäß einer weiteren Ausführungsform umfasst die Ablenkeinrichtung einen Spiegel. Der Spiegel kann als planarer Spiegel oder als Hohlspiegel ausgebildet sein. Die Ausbildung der Ablenkeinrichtung als Spiegel ermöglicht eine kostengünstige Herstellung des optischen Scanners.

Wenn der Spiegel als planarer Spiegel ausgebildet ist, kann dieser bezogen auf die Drehachse unter einem Winkel angeordnet sein, der in einem Bereich von 40° bis 50° liegt und vorzugsweise 45° beträgt. Ein Winkel von 45° ermöglicht einen symmetrischen und übersichtlichen Aufbau der optischen Abbildung innerhalb des optischen Scanners.

Gemäß einer weiteren Ausführungsform umfasst die Lichtquelle einen Laser, der das Objekt punktförmig beleuchtet. Eine solche punktförmige Beleuchtung mittels eines Scanners ermöglicht einen klar definierten Scanvorgang mit hoher Auflösung. Alternativ oder zusätzlich kann die Lichtquelle jedoch auch eine Leuchtdiode (LED) umfassen.

Weiterer Gegenstand der Erfindung ist ein Verfahren zur Ermittlung des Abstands eines Objekts bezogen auf einen optischen Scanner, wie dieser beispielsweise vorstehend beschrieben ist und eine Lichtquelle zum Emittieren eines optischen Sendesignals, eine ortsfeste Empfangseinrichtung sowie eine Ablenkeinrichtung umfasst. Die Empfangseinrichtung ist ausgebildet, Licht zu empfangen, das durch das an einem Objekt reflektierte oder remittierte Sendesignal entsteht, während die Ablenkeinrichtung an dem Objekt reflektiertes oder remittiertes Licht zur Abbildung auf ein Empfangselement der Empfangseinrichtung ablenkt.

Gemäß dem Verfahren wird die Lichtquelle zusammen mit der Ablenkeinrichtung um eine gemeinsame Achse gedreht. Ferner wird der Abstand des Objekts bezogen auf den optischen Sensor anhand eines Abstands zwischen einer Abbildungsposition des Objekts auf dem Empfangselement und einem Bezugspunkt auf dem Empfangselement bestimmt, insbesondere unter Verwendung des Triangulationsprinzips. Zusätzlich wird eine Winkelposition des Objekts bezogen auf eine vorbestimmte Richtung anhand der Abbildungsposition bestimmt.

Das Verfahren kann somit mittels des vorstehend beschriebenen optischen Scanners ausgeführt werden. Für das Verfahren gelten daher die Ausführungen zum optischen Scanner entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Seitenansicht eines erfindungsgemäßen optischen Scanners,
- Fig. 2: eine Draufsicht von oben auf den optischen Scanner zusammen mit zwei Objekten, die bei verschiedenen Abständen und verschiedenen Winkelpositionen bezogen auf den optischen Scanner angeordnet sind, und
- Fig. 3: eine Darstellung einer Abbildung der Objekte von Fig. 2 auf einem Empfangselement des optischen Scanners.

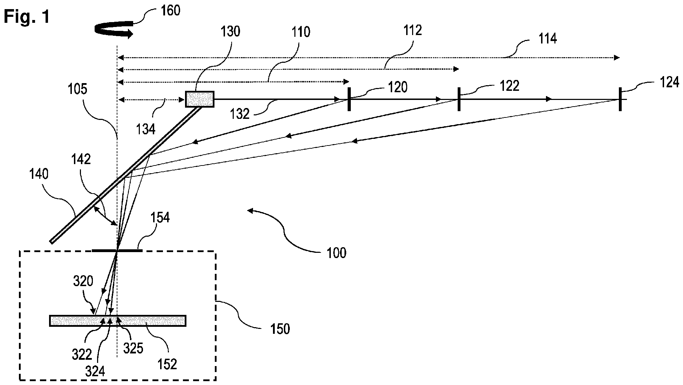

Fig. 1 zeigt eine schematische Darstellung eines erfindungsgemäßen optischen Scanners 100, der zur Ermittlung eines jeweiligen Abstands 110, 112, 114 eines entsprechenden Objekts 120, 122, 124 bezogen auf den optischen Scanner 100 vorgesehen ist. Die Objekte 120, 122, 124 sind lediglich durch Markierungen bei ihrem jeweiligen Abstand 110, 112, 114 veranschaulicht. Die Abstände 110, 112, 114 beziehen sich im vorliegenden Beispiel auf eine Drehachse 105 des optischen Scanners 100.

Der optische Scanner 100 umfasst eine Lichtquelle 130, die als Laser ausgebildet ist und ein optisches Sendesignal 132 radial nach außen emittiert. Mit anderen Worten wirkt die Lichtquelle 130 wie ein Laserpointer, der einen Beleuchtungspunkt auf dem jeweiligen Objekt 120, 122, 124 erzeugt. Wenn der Lichtpunkt des Laserpointers gerade in Richtung eines Objekts zeigt, wird sein Licht vom Objekt remittiert, das heißt in der Regel diffus reflektiert.

Der optische Scanner 100 umfasst ferner eine Ablenkeinrichtung 140 in der Form eines planaren Spiegels und eine Empfangseinrichtung 150. Der planare Spiegel 140 ist unter einem Winkel 142 von 45° bezogen auf die Drehachse 105 angeordnet.

Der Spiegel 140 ist dafür vorgesehen, Licht, das an dem jeweiligen Objekt 120, 122, 124 reflektiert oder remittiert wird, zur Abbildung auf ein Empfangselement 152 der Empfangseinrichtung 150 abzulenken. Licht, das auf den sich drehenden Spiegel 140 trifft, wird von diesem spiegelnd reflektiert. Zur Abbildung des jeweiligen Beleuchtungspunkts an dem jeweiligen Objekt 120, 122, 124 auf dem Empfangselement 152 ist zwischen dem Spiegel 140 und dem Empfangselement 152 eine Empfangsoptik 154 vorgesehen, die als Blende ausgebildet ist. Die Empfangsoptik 154 kann jedoch weitere abbildende Element wie etwa eine oder mehrere Linsen umfassen.

Das Empfangselement 152 der Empfangseinrichtung 150 kann auch als Imager ausgestaltet sein, mit dem das gesamte jeweilige Objekt 120, 122, 124 und nicht nur ein Beleuchtungspunkt mittels der Empfangsoptik 154 auf das Empfangselement 152 abgebildet werden kann. Mittels des Empfangselements 152 des optischen Scanners 100 können somit bei entsprechender Anwendung Kameraaufnahmen der Objekte 120, 122, 124 erfasst werden.

Die Lichtquelle bzw. der Laser 130 ist an dem Spiegel 140 angebracht und an dessen oberem Ende angeordnet. Dadurch ist der Laser 130 bezogen auf die Drehachse 105 um eine Verschiebungsdistanz 134 versetzt angeordnet.

Im Betrieb des optischen Scanners 100 führt die Lichtquelle bzw. der Laser 130 zusammen mit dem Spiegel 140 eine gemeinsame Drehung um die Drehachse 105 aus, da der Laser 130 an dem Spiegel 140 angebracht ist. Die Empfangseinrichtung 150 ist hingegen ortsfest angeordnet, so dass sich der Laser 130 und der Spiegel 140 im Betrieb des optischen Scanners 100 relativ zu der ortsfesten Empfangseinrichtung 150 um die Drehachse 105 drehen. Die Drehbewegung des Lasers 130 zusammen mit dem Spiegel 140 ist durch den Drehpfeil 160 veranschaulicht.

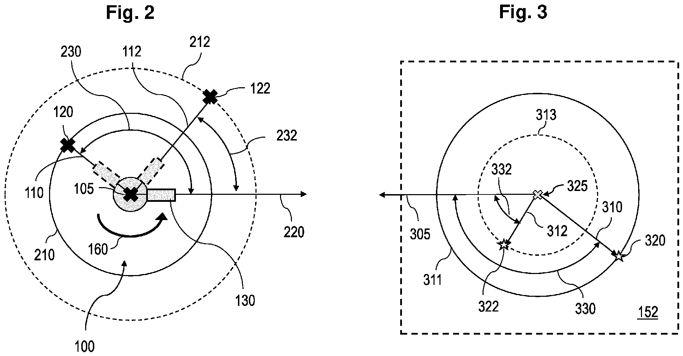

Aufgrund der gemeinsamen Drehbewegung des Lasers 130 und des Spiegels 140 ist es nicht nur möglich, den jeweiligen Abstand 110, 112, 114 der Objekte 120, 122, 124 bezogen auf die Drehachse 105 mittels des Triangulationsprinzips zu ermitteln. Gleichmaßen kann auch eine Winkelposition der jeweiligen Objekte 120, 122, 124 bezogen auf eine vorgegebene Richtung ermittelt werden, wie dies nachstehend im Zusammenhang mit Fig. 2 und 3 erläutert ist. Die Ermittlung der Abstände 110, 112, 114 und der Winkelpositionen der Objekte 120, 122, 124 erfolgt mittels einer nicht dargestellten Auswerteeinheit anhand von elektrischen Signalen, die von dem Empfangselement 152 ausgegeben werden.

Die Ermittlung der jeweiligen Abstände 110, 112, 114 der Objekte 120, 122, 124 erfolgt unter Ausnutzung des Triangulationsprinzips, wie dies in Fig. 1 zu erkennen ist. Wenn die jeweiligen Abstände zwischen dem Spiegel 140, der Blende 154 und dem Empfangselement bzw. Imager 152 sowie die Ausrichtung des Spiegels 140 bezogen auf die Drehachse 105 bekannt sind, die durch den Winkel 142 gegeben ist, können die Abstände 110, 112, 114 auf eine an sich bekannte Weise anhand der Abstände und Winkel in jeweiligen ähnlichen Dreiecken bestimmt werden, wenn auf dem Empfangselement 152 jeweilige Abstände zwischen Abbildungspositionen 320, 322, 324 der Objekte 120, 122,124 und einem Bezugspunkt 325 auf dem Empfangselement 152 ermittelt werden.

Fig. 2 zeigt eine schematische Draufsicht von oben auf den optischen Scanner 100 von Fig. 1 zusammen mit den beiden Objekten 120, 122. Die Objekte 120, 122 sind nicht nur bei unterschiedlichen Abständen 110, 112 bezogen auf die Drehachse 105, sondern zusätzlich unter verschiedenen Winkeln 230, 232 bezogen auf eine Bezugsrichtung 220 angeordnet.

Fig. 3 zeigt hingegen eine schematische Draufsicht von oben auf das zweidimensionale Empfangselement bzw. dem Imager 152. Der Übersichtlichkeit halber sind in den Fig. 2 und 3 nur die Objekte 120 und 122 mit den jeweiligen Abständen 110 bzw. 112, den entsprechenden Abbildungspositionen 320, 322 und deren Abständen 310, 312 bezogen auf den Bezugspunkt 325 dargestellt. Aufgrund der optischen Abbildung über den Spiegel 140 sind die Abbildungspositionen 320, 322 von Fig. 3 bezogen auf die Positionen der Objekte 120 und 122 von Fig. 2 in der Draufsicht um 180° gedreht. Wie man am besten in der Seitenansicht von Fig. 1 erkennen kann, befinden sich nämlich die Positionen der Objekte 120, 122 einerseits und die Abbildungspositionen 320, 322 andererseits bezogen auf die Drehachse 105 auf entgegengesetzten Seiten.

An den Positionen 320 bzw. 322 detektiert das Empfangselement 152 die jeweilige Abbildung der Punkte an dem Objekt 120 bzw. 122, die von dem Laser 130 mittels des Sendesignals 132 beleuchtet werden (vgl. Fig. 1). Anhand der jeweiligen Abstände 310, 312 (vgl. Fig. 3) bezogen auf den Bezugspunkt 325 kann mittels des Triangulationsprinzips der jeweilige Abstand 110 bzw. 112 bestimmt werden, wie vorstehend erläutert ist.

Das zweidimensionale Empfangselement bzw. der Imager 152 ist als Feld mit einer zweidimensionalen Anordnung lichtempfindlicher Pixel ausgebildet. Dadurch ist der Imager 152 in der Lage, ein oder mehrere Pixel und deren Positionen zu bestimmen, an denen sich die Abbildungspositionen 320, 322 befinden. Anhand der Position der Pixel ist somit die Position der Bildpunkte 320, 322 in der Ebene des Imagers 152 bekannt. Der Bezugspunkt 325 kann mittels einer Kalibrierung ermittelt werden, beispielsweise mit einem oder mehreren Objekten, die unter einem großen Abstand mittels des Lasers 130 beleuchtet werden.

Wie man in Fig. 1 erkennen kann, verhalten sich die Abstände 110, 112, 114 der Objekte 120, 122, 124 umgekehrt proportional zu den Abständen der entsprechenden Abbildungspunkte 320, 322, 324 bezogen auf den Bezugspunkt 325. Anders ausgedrückt wandern die Abbildungspunkte immer weiter in Richtung des Bezugspunkts 325, wenn der Abstand des jeweiligen Objekts zunimmt.

Zur Veranschaulichung dieses Zusammenhangs zwischen den Abständen 110, 112 der Objekte 120, 122 bezogen auf die Drehachse 105 und den Abständen 310, 312 in der Ebene des Imagers 152 sind in Fig. 2 zusätzlich Kreise 210, 212 dargestellt, deren Mittelpunkt jeweils die Drehachse 105 bildet und deren Radius dem jeweiligen Abstand 110 bzw. 112 der Objekte 120, 122 bezogen auf die Drehachse 105 entspricht. In Fig. 3 sind entsprechende Kreise 311, 313 dargestellt, deren Mittelpunkt der Bezugspunkt 325 bildet und deren Radius jeweils dem Abstand 310 bzw. 312 der Abbildungspunkte 320 bzw. 322 bezüglich des Bezugspunkts 325 in der Ebene des Imagers 152 entspricht.

Alle Objekte, die auf dem jeweiligen Kreis 210 bzw. 212 angeordnet sind und somit den gleichen Abstand 110 bzw. 112 bezogen auf die Drehachse 105 aufweisen, erzeugen entsprechende Abbildungspunkte, die in der Ebene des Imagers 152 auf dem entsprechenden Kreis 311 bzw. 313 mit dem Radius 310 bzw. 312 liegen. Den Objekten mit dem größerem Abstand 112, die entsprechend auf dem gestrichelt dargestellten Kreis 212 mit größerem Radius 112 angeordnet sind, sind in der Ebene des Imagers 152 Bildpunkte mit dem Abstand 312 auf dem gestrichelt dargestellten Kreis 313 mit kleinerem Radius 312 zugeordnet. Umgekehrt sind den Objekten mit dem kleinerem Abstand 110, die auf dem durchgezogen dargestellten Kreis 210 angeordnet sind, in der Ebene des Imagers 152 Abbildungspositionen auf dem größeren durchgezogenen Kreis mit dem Radius 310 zugeordnet. Die gestrichelten und durchgezogenen Kreise veranschaulichen somit das umgekehrt proportionale Verhältnis der realen Abstände 110, 112 zu den Abständen 310, 312 in der Ebene des Imagers 152.

Da die Lichtquelle bzw. der Laser 130 zusammen mit dem Spiegel 140 (vgl. Fig. 1) eine gemeinsame Drehbewegung um die Drehachse 105 ausführt (vgl. den Drehpfeil 160 in Fig. 1 und 2), werden die Objekte 120, 122 durch dem Laser 130 mittels des Sendesignals 132 beleuchtet, sobald die gemeinsame Drehbewegung des Lasers 130 und des Spiegels 140 den Winkel 230 bzw. 232 erreicht (vgl. Fig. 2). In der Ebene des Empfangselements bzw. Imagers 152 entsteht dann, wenn der Laser 130 während der Drehbewegung unter dem Winkel 230 bzw. 232 bezogen auf die Bezugsrichtung 220 ausgerichtet ist und das jeweilige Objekt 120, 122 beleuchtet, der entsprechende Abbildungspunkt 320 bzw. 322, der jeweils in Fig. 3 dargestellt ist.

Aufgrund der optischen Abbildung entspricht der Bezugsrichtung 220 von Fig. 2 eine Abbildungs-Bezugsrichtung 305 in Fig. 3, die bezogen auf die Bezugsrichtung 220 um 180° gedreht ist. Wenn die Bezugsrichtung 220 beispielsweise den Beginn eines jeweiligen Drehscans markiert und somit einen Winkel von 0° definiert, beginnt der Drehscan in der in Fig. 3 dargestellten Ebene des Empfangselements 152 bei der Abbildungs-Bezugsrichtung 305, die somit in der Ebene des Empfangselements 152 den entsprechenden Winkel von 0° festlegt. Jeweilige Winkel 330, 332 der Abbildungspositionen 320, 322 sind daher in der Ebene des Empfangselements 152 bezogen auf die Abbildungs-Bezugsrichtung 305 zu bestimmen.

Wenn die Bezugsrichtung 220 beispielsweise als Anfangsausrichtung des Lasers 130 und des Spiegels 140 für den Drehscan bzw. die Drehbewegung gegeben ist, ist es möglich, den jeweiligen Winkel 230, 232 der Objekte 120, 122 bezogen auf die Bezugsrichtung 220 anhand des jeweiligen Bildes der beleuchteten Objekte 120, 122 (vgl. Fig. 1) bzw. der Pixel der Abbildungspositionen 320, 322 (vgl. Fig. 2) bzw. anhand deren Winkel 330, 332 bezogen auf die Abbildungs-Bezugsrichtung 305 zu bestimmen. Die Winkelposition des Lasers 130 während dessen Drehbewegung zusammen mit dem Spiegel 140 ist somit einer entsprechenden Winkelposition auf dem Empfangselement 152 bzw. dem Imager fest zugeordnet, so dass die Winkelposition in der Ebene des Imagers 152 eindeutig kodiert ist. Die Winkel 330, 332 in der Ebene des Imagers 152 entsprechen also direkt den Winkeln 230, 232, unter denen das jeweilige Objekt 120 bzw. 122 während der Drehbewegung des Lasers 130 von diesem beleuchtet wird.

Der Vorteil des optischen Scanners 100 besteht einerseits darin, dass er nicht auf einen bestimmten Winkelbereich beschränkt ist, sondern eine Abtastung von Objekten 120, 122, 124 über einen Vollwinkel von 360° ermöglicht. Dies ist durch die gemeinsame Drehbewegung des Lasers 130 und des Spiegels 140 bedingt. Darüber hinaus gestattet der optische Scanner 100 die Ermittlung der jeweiligen Winkelposition von Objekten 120, 122, 124, da eine Winkelposition in der Ebene des Imagers 152 durch die gemeinsame Drehbewegung des Lasers 130 und des Spiegels 140 eindeutig kodiert ist.

Wenn die Pixel des Empfangselements 152 im sichtbaren Spektralbereich empfindlich sind, kann die Empfangseinrichtung 150 außer der Abstands- und Winkelermittlung eine Kameraaufnahme der jeweiligen Objekte 120, 122, 124 erfassen. Wenn jedoch keine Kameraaufnahmen der Objekte 120, 122, 124 erfolgen sollen, kann direkt an der Empfangseinrichtung 150 ein Datenkompression durchgeführt werden, da nur ein Teil der Pixel für die Abstands- und Winkelermittlung relevant ist.

Ferner ist es auch möglich, dass der optische Scanner 100 zusätzlich zu dem Laser 130 weitere Laser umfasst, um gleichzeitig mehrere Abstände unterschiedlicher Objekte 120, 122, 124 zu bestimmen. Außerdem kann durch die Verwendung mehrerer Laser als Lichtquelle die Abstandsauflösung im Vergleich zur Verwendung eines einzigen Lasers 130 verbessert werden.

### Bezugszeichenliste

- 100: optischer Scanner
- 105: Drehachse
- 110, 112, 114: jeweiliger Abstand eines Objekts
- 120, 122, 124: Objekt
- 130: Lichtquelle, Laser
- 132: Sendesignal
- 134: Verschiebungsdistanz
- 140: Spiegel
- 142: Winkel des Spiegels bezogen auf die Drehachse
- 150: Empfangseinrichtung
- 152: Empfangselement, Imager
- 154: Blende, Empfangsoptik
- 160: Drehpfeil
- 210, 212: Kreis mit Mittelpunkt auf der Drehachse
- 220: Bezugsrichtung
- 230, 232: Winkel des Objekts
- 305: Abbildungs-Bezugsrichtung
- 310, 312: Abstand zwischen Abbildungsposition und Bezugspunkt
- 311, 313: Kreise mit dem Bezugspunkt als Mittelpunkt
- 320, 322: Abbildungsposition
- 325: Bezugspunkt
- 330, 332: Winkel der Abbildungsposition in der Ebene des Empfangselements

## Patentansprüche

1. Optischer Scanner (100) zur Ermittlung des Abstands (110, 112, 114) eines Objekts (120, 122, 124) bezogen auf den optischen Scanner (100), umfassend:
mindestens eine Lichtquelle (130) zum Emittieren eines optischen Sendesignals (132),
eine Empfangseinrichtung (150), die ausgebildet ist, Licht zu empfangen, das durch das an einem Objekt (120, 122, 124) reflektierte oder remittierte Sendesignal (132) entsteht,
wobei ein Empfangselement (152) der Empfangseinrichtung (150) durch eine zweidimensionale Anordnung lichtempfindlicher Pixel gebildet ist,
eine Ablenkeinrichtung (140), die an dem Objekt (120, 122, 124) reflektiertes oder remittiertes Licht zur Abbildung auf ein Empfangselement (152) der Empfangseinrichtung (150) ablenkt, und
eine Auswerteeinrichtung zur Bestimmung des Abstands (110, 112, 114) des Objekts (120, 122, 124) bezogen auf den optischen Scanner (100) anhand eines Abstands (310, 312) zwischen einer Abbildungsposition (320, 322) des Objekts (120, 122, 124) auf dem Empfangselement (152) und einem Bezugspunkt (325) auf dem Empfangselement (152),
wobei die Lichtquelle (130) ausgebildet ist, zusammen mit der Ablenkeinrichtung (140) eine Drehbewegung um eine gemeinsame Achse (105) auszuführen,
wobei die Empfangseinrichtung (150) derart ortsfest angeordnet ist, dass sich die Lichtquelle (130) und die Ablenkeinrichtung (140) im Betrieb des optischen Scanners (100) relativ zu der ortsfesten Empfangseinrichtung um die gemeinsame Achse (105) drehen, und
wobei eine Winkelposition (230, 232) des Objekts (120, 122, 124) bezogen auf eine vorbestimmte Richtung (220) anhand der Abbildungsposition (320, 322) auf dem Empfangselement (152) bestimmbar ist.

2. Optischer Scanner (100) nach Anspruch 1,
**dadurch gekennzeichnet, dass**
zwischen der Ablenkeinrichtung (140) und dem Empfangselement (152) eine Empfangsoptik (154) vorgesehen ist.

3. Optischer Scanner (100) nach Anspruch 1 oder 2,
**dadurch gekennzeichnet, dass**
die Lichtquelle (130) an der Ablenkeinrichtung (140) angebracht ist.

4. Optischer Scanner (100) nach einem der vorstehenden Ansprüche,
**dadurch gekennzeichnet, dass**
die Lichtquelle (130) bezogen auf die Drehachse (105) in einer Richtung senkrecht zu der Drehachse (105) versetzt ist.

5. Optischer Scanner (100) nach einem der vorstehenden Ansprüche,
**dadurch gekennzeichnet, dass**
die Lichtquelle (130) bezüglich einer horizontalen Ebene, die senkrecht zu der Drehachse (105) verläuft, um einen vordefinierten Winkel geneigt ist.

6. Optischer Scanner (100) nach Anspruch 5,
**dadurch gekennzeichnet, dass**
die Neigung der Lichtquelle (130) einstellbar ist.

7. Optischer Scanner (100) nach einem der vorstehenden Ansprüche,
**dadurch gekennzeichnet, dass**
die Ablenkeinrichtung (140) einen Spiegel umfasst.

8. Optischer Scanner (100) nach Anspruch 7,
**dadurch gekennzeichnet, dass**
der Spiegel (140) als planarer Spiegel ausgebildet ist.

9. Optischer Scanner (100) nach Anspruch 8,
**dadurch gekennzeichnet, dass**
der Spiegel (140) bezogen auf die Drehachse (105) unter einem Winkel von 40 bis 50 Grad, vorzugsweise von 45 Grad, angeordnet ist.

10. Optischer Scanner (100) nach einem der vorstehenden Ansprüche,
**dadurch gekennzeichnet, dass**
die Lichtquelle (130) einen Laser umfasst, der das Objekt (120, 122, 124) punktförmig beleuchtet.

11. Verfahren zur Ermittlung des Abstands (110, 112, 114) eines Objekts (120, 122, 124) bezogen auf einen optischen Scanner (100),
wobei der optische Scanner (100) umfasst:
eine Lichtquelle (130) zum Emittieren eines optischen Sendesignals (132),
eine Empfangseinrichtung (150), die ausgebildet ist, Licht zu empfangen, das durch das an einem Objekt (120, 122, 124) reflektierte oder remittierte Sendesignal (132) entsteht,
wobei ein Empfangselement (152) der Empfangseinrichtung (150) durch eine zweidimensionale Anordnung lichtempfindlicher Pixel gebildet ist, und
eine Ablenkeinrichtung (140), die an dem Objekt (120, 122, 124) reflektiertes oder remittiertes Licht zur Abbildung auf ein Empfangselement (152) der Empfangseinrichtung (150) ablenkt,
wobei das Verfahren umfasst, dass:
die Lichtquelle (130) zusammen mit der Ablenkeinrichtung (140) um eine gemeinsame Achse (105) gedreht wird,
wobei die Empfangseinrichtung (150) derart ortsfest angeordnet ist, dass sich die Lichtquelle (130) und die Ablenkeinrichtung (140) im Betrieb des optischen Scanners (100) relativ zu der ortsfesten Empfangseinrichtung um die gemeinsame Achse (105) drehen
der Abstand (110, 112, 114) des Objekts (120, 122, 124) bezogen auf den optischen Scanner (100) anhand eines Abstands (310, 312) zwischen einer Abbildungsposition (320, 322) des Objekts (120, 122, 124) auf dem Empfangselement (152) und einem Bezugspunkt (325) auf dem Empfangselement (152) bestimmt wird und
eine Winkelposition (230, 232) des Objekts (120, 122, 124) bezogen auf eine vorbestimmte Richtung (220) anhand der Abbildungsposition (320, 322) bestimmt wird.

## Claims

1. An optical scanner (100) for determining the distance (110, 112, 114) of an object (120, 122, 124) with respect to the optical scanner (100), said optical scanner (100) comprising:
at least one light source (130) for emitting an optical transmission signal (132),
a reception device (150) that is configured to receive light which is produced by the transmission signal (132) reflected or remitted at an object (120, 122, 124),
wherein a reception element (152) of the reception device (150) is formed by a two-dimensional arrangement of light-sensitive pixels,
a deflection device (140) that deflects light, which is reflected or remitted at the object (120, 122, 124), for imaging onto a reception element (152) of the reception device (150), and
an evaluation device for determining the distance (110, 112, 114) of the object (120, 122, 124) with respect to the optical scanner (100) based on a distance (310, 312) between an imaging position (320, 322) of the object (120, 122, 124) on the reception element (152) and a reference point (325) on the reception element (152),
wherein the light source (130) is configured to perform a rotary movement about a common axis (105) together with the deflection device (140),
wherein the reception device (150) is arranged in a stationary manner such that the light source (130) and the deflection device (140) rotate about the common axis (105) relative to the stationary reception device during the operation of the optical scanner (100), and
wherein an angular position (230, 232) of the object (120, 122, 124) can be determined with respect to a predetermined direction (220) based on the imaging position (320, 322) on the reception element (152).

2. An optical sensor (100) according to claim 1,
**characterized in that**
a reception optics (154) is provided between the deflection device (140) and the reception element (152).

3. An optical sensor (100) according to claim 1 or 2,
**characterized in that**
the light source (130) is attached to the deflection device (140).

4. An optical sensor (100) according to any one of the preceding claims,
**characterized in that**
the light source (130) is offset with respect to the axis of rotation (105) in a direction perpendicular to the axis of rotation (105).

5. An optical sensor (100) according to any one of the preceding claims,
**characterized in that**
the light source (130) is inclined by a predefined angle with respect to a horizontal plane which extends perpendicular to the axis of rotation (105).

6. An optical sensor (100) according to claim 5,
**characterized in that**
the inclination of the light source (130) can be set.

7. An optical sensor (100) according to any one of the preceding claims,
**characterized in that**
the deflection device (140) comprises a mirror.

8. An optical sensor (100) according to claim 7,
**characterized in that**
the mirror (140) is configured as a planar mirror.

9. An optical sensor (100) according to claim 8,
**characterized in that**
the mirror (140) is arranged at an angle of 40 to 50 degrees, preferably of 45 degrees, with respect to the axis of rotation (105).

10. An optical sensor (100) according to any one of the preceding claims,
**characterized in that**
the light source (130) comprises a laser which illuminates the object (120, 122, 124) in a point-like manner.

11. A method for determining the distance (110, 112, 114) of an object (120, 122, 124) with respect to an optical scanner (100),
wherein the optical scanner (100) comprises:
a light source (130) for emitting an optical transmission signal (132),
a reception device (150) that is configured to receive light which is produced by the transmission signal (132) reflected or remitted at an object (120, 122, 124),
wherein a reception element (152) of the reception device (150) is formed by a two-dimensional arrangement of light-sensitive pixels, and
a deflection device (140) that deflects light, which is reflected or remitted at the object (120, 122, 124), for imaging onto a reception element (152) of the reception device (150),
wherein the method comprises that:
the light source (130) is rotated together with the deflection device (140) about a common axis (105),
wherein the reception device (150) is arranged in a stationary manner such that the light source (130) and the deflection device (140) rotate about the common axis (105) relative to the stationary reception device during the operation of the optical scanner (100),
the distance (110, 112, 114) of the object (120, 122, 124) with respect to the optical scanner (100) is determined based on a distance (310, 312) between an imaging position (320, 322) of the object (120, 122, 124) on the reception element (152) and a reference point (325) on the reception element (152), and
an angular position (230, 232) of the object (120, 122, 124) is determined with respect to a predetermined direction (220) based on the imaging position (320, 322).

## Revendications

1. Scanner optique (100) destiné à déterminer la distance (110, 112, 114) d'un objet (120, 122, 124) par rapport au scanner optique (100), comprenant :
au moins une source de lumière (130) destinée à émettre un signal optique d'émission (132),
un dispositif de réception (150) conçu pour recevoir la lumière résultant du signal d'émission (132) réfléchi ou renvoyé par un objet (120, 122, 124), un élément de réception (152) du dispositif de réception (150) étant formé par une disposition bidimensionnelle de pixels photosensibles,
un dispositif de déviation (140) qui dévie la lumière réfléchie ou renvoyée par l'objet (120, 122, 124) afin de la représenter sur un élément de réception (152) du dispositif de réception (150), et
un dispositif d'évaluation destiné à définir la distance (110, 112, 114) de l'objet (120, 122, 124) par rapport au scanner optique (100) à partir d'une distance (310, 312) entre une position de représentation (320, 322) de l'objet (120, 122, 124) sur l'élément de réception (152) et un point de référence (325) sur l'élément de réception (152),
dans lequel
la source de lumière (130) est conçue pour effectuer, conjointement avec le dispositif de déviation (140), un mouvement de rotation autour d'un axe commun (105),
le dispositif de réception (150) est disposé de manière fixe de telle sorte que la source de lumière (130) et le dispositif de déviation (140) tournent autour de l'axe commun (105) par rapport au dispositif de réception fixe pendant le fonctionnement du scanner optique (100), et
une position angulaire (230, 232) de l'objet (120, 122, 124) par rapport à une direction prédéfinie (220) peut être définie à partir de la position de représentation (320, 322) sur l'élément de réception (152).

2. Scanner optique (100) selon la revendication 1,
**caractérisé en ce que**
une optique de réception (154) est prévue entre le dispositif de déviation (140) et l'élément de réception (152).

3. Scanner optique (100) selon la revendication 1 ou 2,
**caractérisé en ce que**
la source de lumière (130) est montée sur le dispositif de déviation (140).

4. Scanner optique (100) selon l'une des revendications précédentes,
**caractérisé en ce que**
la source de lumière (130) est décalée par rapport à l'axe de rotation (105) dans une direction perpendiculaire à l'axe de rotation (105).

5. Scanner optique (100) selon l'une des revendications précédentes,
**caractérisé en ce que**
la source de lumière (130) est inclinée d'un angle prédéfini par rapport à un plan horizontal qui s'étend perpendiculairement à l'axe de rotation (105).

6. Scanner optique (100) selon la revendication 5,
**caractérisé en ce que**
l'inclinaison de la source de lumière (130) est réglable.

7. Scanner optique (100) selon l'une des revendications précédentes,
**caractérisé en ce que**
le dispositif de déviation (140) comprend un miroir.

8. Scanner optique (100) selon la revendication 7,
**caractérisé en ce que**
le miroir (140) est réalisé sous la forme d'un miroir plan.

9. Scanner optique (100) selon la revendication 8,
**caractérisé en ce que**
le miroir (140) est disposé selon un angle de 40 à 50 degrés, de préférence de 45 degrés, par rapport à l'axe de rotation (105).

10. Scanner optique (100) selon l'une des revendications précédentes,
**caractérisé en ce que**
la source de lumière (130) comprend un laser qui éclaire ponctuellement l'objet (120, 122, 124).

11. Procédé de détermination de la distance (110, 112, 114) d'un objet (120, 122, 124) par rapport à un scanner optique (100),
le scanner optique (100) comprenant :
une source de lumière (130) destinée à émettre un signal optique d'émission (132),
un dispositif de réception (150) conçu pour recevoir la lumière résultant du signal d'émission (132) réfléchi ou renvoyé par un objet (120, 122, 124), un élément de réception (152) du dispositif de réception (150) étant formé par une disposition bidimensionnelle de pixels photosensibles, et
un dispositif de déviation (140) qui dévie la lumière réfléchie ou renvoyée par l'objet (120, 122, 124) afin de la représenter sur un élément de réception (152) du dispositif de réception (150),
le procédé consistant à :
faire tourner la source de lumière (130), conjointement avec le dispositif de déviation (140), autour d'un axe commun (105),
le dispositif de réception (150) étant disposé de manière fixe de telle sorte que la source de lumière (130) et le dispositif de déviation (140) tournent autour de l'axe commun (105) par rapport au dispositif de réception fixe pendant le fonctionnement du scanner optique (100),
définir la distance (110, 112, 114) de l'objet (120, 122, 124) par rapport au scanner optique (100) à partir d'une distance (310, 312) entre une position de représentation (320, 322) de l'objet (120, 122, 124) sur l'élément de réception (152) et un point de référence (325) sur l'élément de réception (152), et
définir une position angulaire (230, 232) de l'objet (120, 122, 124) par rapport à une direction prédéfinie (220) à partir de la position de représentation (320, 322).
